# EUROPEAN PATENT APPLICATION

(11) **EP 2 224 664 A1**
(43) Date of publication of application: **01.09.2010**
(21) Application number: 09153711.8
(22) Date of filing: 26.02.2009
(51) Int. Cl.: H04L 29/06

(54) **Method and system for controlling call admission in IMS**

(71) Applicant: Vodafone Group PLC, Newbury Berkshire RG14 2FN (GB)
(72) Inventor: Stura, Marco, 10010, Rueglio (TO) (IT); Farrugia, Maria, Guildford, Surrey GU1 2EG (GB); Monti, Maurizio, 20090, Settala (MI) (IT)
(74) Representative: Bonvicini, Davide

(57) **Abstract**

A method and a system for controlling call admission for parallel ringing processes to a realm in an IMS (3) is disclosed. The method comprises receiving a call control message to a called party (21), determining whether the called party has parallel ringing enabled, if positive, generating a plurality of parallel call control messages, associating to each parallel call control message a parallel ringing identifier indicating that the corresponding call control message is a parallel call control message, receiving a plurality of call control messages directed towards the realm, performing call admission control for this realm by verifying whether a parallel ringing identifier is associated to each call control message directed towards this realm so as to determine if the call control message is a parallel call control message.

## Description

The present invention generally relates to a method and a communication system for controlling call admission for parallel ringing processes to a realm in an IP Multimedia Subsystem (IMS).

The IP-based network architecture referred to as IMS has been developed with the aim of allowing service providers to deliver network services, namely independent of the type of network on which they are being run, the network being a packet-switched (e.g., IP) network or a circuit-switched (CS) cellular or fixed-line network.

Current 3^{rd} Generation Partnership Project (3GPP) has chosen Session Initiation Protocol (SIP) to be the signalling protocol in IMS. A user terminal or a user equipment (UE) can connect to an IMS from various IP based access technologies, such as 3G, LTE, WLAN, xDSL.

The SIP protocol defines several types of entities involved in establishing sessions between SIP user equipments (UEs), typically a calling party and a called party. It is originally a peer-to-peer protocol, but in practice is used with a multiple types of servers, making the communication, in most cases, client-server based.

Within the IMS/SIP architecture, SIP entities are collectively referred to as Call Section Control Function (CSCF) and include at least one of three kinds of functions: Proxy-CSCF (P-CSCF), Serving-CSCF (S-CSCF), and Interrogating-CSCF (I-CSCF). A P-CSCF is the entry point to the IMS domain and serves as the outbound proxy server for the UE, i.e., it enables the UE to gain access. An S-CSCF is a SIP server that performs session control based upon the SIP in the home network. Finally, an I-CSCF has a role of stateless inbound SIP proxy server for accepting any interrogation from other CSCFs or having a gateway function with other networks. Each of the P-CSCF, I-CSCF, and S-CSCF functions may be configured as a physically separated server or alternatively one or more functions may be physically merged with another as an integrated server.

According to SIP signalling process, to initiate a session, the caller sends a request with the SIP URI (Uniform Resource Identification) of the called party, referred as Requested-URI (R-URI). This request is first handled by an outbound proxy, such as P-CSCF, which processes a request message before forwarding the request to another server, i.e., a S-CSCF or I-CSCF, which can service the request internally or pass it on, possibly after translation to other servers. P-CSCF, S-CSCF and I-CSCF processing is defined in 3GPP TS 23.228 and TS 24.229.

Parallel ringing is one of many advanced features offered by communication service providers such as, for example, providers of voice over Internet protocol (VOIP) and/or public switched telephone network (PSTN) based communication services. When parallel ringing is enabled for a telephone number, a call placed by a caller to the telephone number of a called party causes a list of configured telephone numbers, of the same user in case of forking and of different users in case of multiple ringing, to ring at the same time. In some example systems, parallel ringing is offered as service that can be configured by a user and/or consumer. The user and/or consumer specifies and/or configures a telephone number with the additional telephone numbers to be rung when a call is placed to the telephone number.

As used herein, parallel ringing is meant to indicate a process that is receiving an incoming SIP message destined to a user (e.g. an INVITE) and is sending multiple parallel outgoing messages (e.g. multiple INVITEs) directed to possibly different users as a result. Example of such parallel ringing processes are SIP forking and multiple ringing applications.

Forking, as defined in RFC 3261, is a process where a user B wishes calls addressed to him to be redirected to a plurality of registered contacts. For example, a user B has registered multiple devices, such as a mobile, a fixed phone, a set-top-box and a PC client so that user B will show multiple contacts, one for each registered device. When a user A calls user B, the INVITE message sent by user A arrives at the forking proxy that will send multiple INVITE messages, one for each registered contact/device. The multiple INVITE messages, which are directed to the same user but different devices, have the same Call-Id but different From tag and different Branch in the Via header.

Multiple ringing is a process where a user B wishes to ring other users in parallel, for example C, D and E. The R-URI is changed from the R-URI of user B to the R-URI of users C, D and E. This operation is performed by a Back to Back User Agent (B2BUA) that also changes the Call-Id of the outgoing INVITE messages as they are directed to different users so that these outgoing INVITEs are processed as new INVITEs.

It should be noted that, typically, a corporate or a consumer signs an agreement for a limited amount of bandwidth sufficient to accommodate a defined number of calls. In order to control access to the IMS/SIP network, Call Admission Control (CAC) is performed at the IMS/SIP edge.

To this purpose, it is known to use a Session Border Controller (SBC) performing CAC based on the knowledge of available bandwidth allocated to a given realm and the codec with the highest bit rate as seen from the Session Description Protocol (SDP) in an INVITE message. As used herein, realm is meant a public or private IP subnet, where a subnet is a portion of the network computers and network devices having a common, designated IP address routing prefix.

Alternatively, a SIP Proxy/P-CSCF cooperates with a policy server which performs CAC. In this architectural option, the policy server is the entity aware of available resources of the realm and is entitled to instruct the SIP Proxy/P-CSCF to allow or prevent the call to continue based on the information derived from the INVITE/SDP.

In particular circumstances, parallel ringing requests at an SBC may terminate in the same realm. In fact, the SBC or another policy server perform CAC for each single INVITE message, independently, reserving resources for all parallel ringing calls in the same realm.

In fact, CAC is a deterministic and informed decision that is made before a connection is established and is based on the available bandwidth. Therefore, at the entity performing CAC, all call control messages are processed independently so that CAC is performed for each of the call legs generated as a results of a parallel ringing process generated at the reception of the INVITE message.

As a consequence, the CAC entities could reject one or more INVITEs that need to be sent to the same realm, such as to the same corporate or Consumer Provided Equipment (CPE) if sufficient bandwidth is not available for all the received INVITEs. However, it has to be noted that parallel ringing applications allow only one terminating call leg to succeed (typically the first answered call) and cancel all the other pending call legs (for example by sending a CANCEL message).

In the case that access resources were not available for all the call legs terminating at the same realm, the above described CAC behaviour would reject some of them. As a result, not all the phones configured by the user for parallel ringing will ring with a consequent bad user experience and possible complaints to the service provider.

In a multiple ringing process, when an Application Server (AS) operating in B2BUA mode receives an incoming INVITE and, depending on the policy of the user, generates a plurality of outgoing INVITEs to set up a multiple ringing call, these INVITEs are typically generated each with a different Call-Id. In this case, the entity performing CAC is not able to correlate the INVITE messages so as to perform a single resource reservation/CAC.

In a forking process, where the forking proxy also generates a plurality of outgoing INVITEs to set up a multiple ringing call, these INVITE's are typically generated with same Call-Id, but different From tag and Branch in the Via header. In this case, the entity performing CAC can correlate the INVITE messages using the same Call-Id so as to perform a single resource reservation/CAC. However, this correlation would be intensive since checking operation has to be performed for all the received INVITEs regardless of whether they are forked INVITE messages generated by the forking process or INVITE messages sent by a caller party.

The problem underlying the present invention is to allow the entity performing CAC to efficiently perform correlation of the relevant INVITE messages, i.e. only the INVITE messages that are indeed the result of a multiple ringing or forking process and thus to allocate resources only for one call per realm.

According to an aspect, the present invention is directed to a method for controlling call admission for parallel ringing processes to a realm in an IMS as claimed in claim 1.

According to another aspect, the present invention is directed to a computer program product according to claim 9.

According to another aspect, the present invention is directed to a system for controlling call admission for parallel ringing processes to a realm in an IMS as claimed in claim 10.

The present invention now will be described more fully hereinafter with reference to the accompanying drawings, in which some, but not all embodiments of the invention are shown.

FIG. 1 schematically illustrates an overview of a IMS/SIP architecture.

FIG. 2 is a schematic diagram representing a method for controlling call admission for parallel ringing processes to a realm in an IMS according to one embodiment of the present invention.

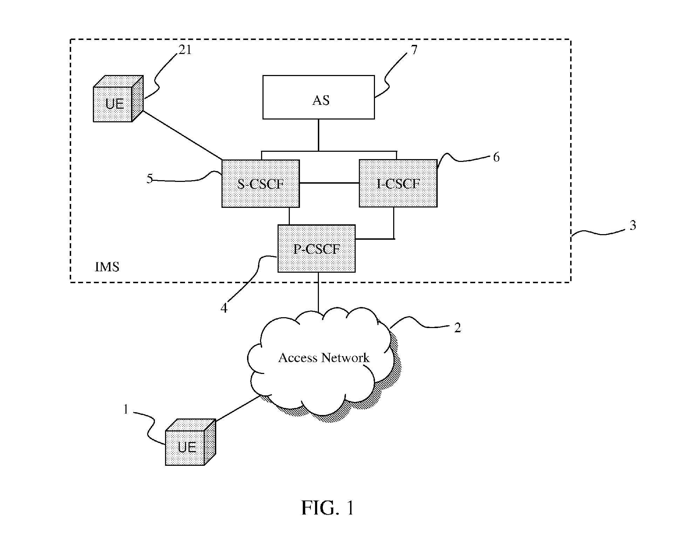

A schematic overview of an IMS/SIP architecture is illustrated in Fig. 1, in which for the purposes of the present discussion only some of the functions are shown.

A user equipment (UE) 1 of a user A is communicating in an access network 2, which can be a packet-switched (PS) network or a circuit-switched (CS) network. The access network 2 is linked to an IP Multimedia Subsystem (IMS) 3.

The IMS 3 comprises a Proxy-CSCF (P-CSCF) 4, a Serving-CSCF (S-CSCF) 5, and an Interrogating-CSCF (I-CSCF) 6.

The P-CSCF 4 is the entry point to IMS domain and enables the UE 1 to access the IMS 3.

The S-CSCF 5 is a SIP server that performs session control based upon the SIP in the home network and is serving a UE 21 of a user B. Finally, the I-CSCF 6 has a role of stateless inbound SIP proxy server for accepting any interrogation from other CSCFs or having a gateway function with other networks. Each of the P-CSCF, I-CSCF, and S-CSCF functions may be configured as a physically separated server or alternatively one or more functions may be physically merged with another as an integrated server.

The S-CSCF 5 and the I-CSCF 6 interface with an application server (AS) 7 using SIP. The application server AS 7 hosts and executes services and is linked to a home subscriber server (HSS) not shown in the figures, which is a database containing IMS subscriber-related information, including identification, authorized services, subscribed services and can provide information about the user's physical location.

If the user A wishes to call user B, the user A initiates a call which prompts the UE 1, in particular the user agent (UA) included in the UE 1, to transmit a call control message to the UA included in the UE 21 of the user/called party B. In the examples, the call control message is a SIP INVITE message and the routing/establishing of a communication session is performed according to SIP (IETF RFC 3261 or 3GPP TS 23.228 and TS 24.229).

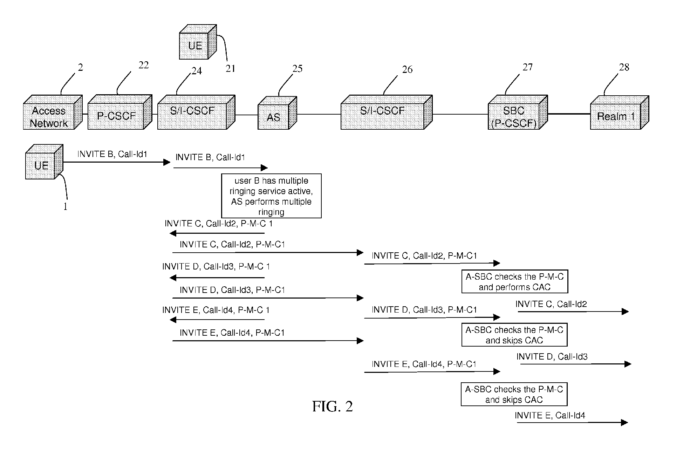

Referring now to figure 2, the SIP UA included in the user equipment UE 1 of the user A sends an INVITE message, via the access network to the proxy server P-CSCF 22 of the IMS 3 requesting to set up a session with the SIP UA included in the user equipment UE 21 of a called party B.

The INVITE message comprises, amongst other data, a call identification header that contains a Call-Id that uniquely identifies the call prompted by UE 1 for UE 21.

The INVITE message is received by a first entity, the P-CSCF 22, and is forwarded to a S-CSCF or I-CSCF, involved in the signalling transmission before it reaches the destination UE 21 of the user B (i.e., the called party, not shown in the figure).

In the illustrated example, the P-CSCF 22 receives the INVITE message and forwards it to the S/I-CSCF 24 (the terminology means that it can comprise an S-CSCF or an I-CSCF) serving the user B.

The server S/I-CSCF 24 is a SIP server that acts as the central point of IMS 3.
The functions of the S/I-CSCF 24 include handling registrations of the mobile node, inspecting messages being routed through the S/I-CSCF, deciding the application server (AS) to provide service, providing routing services such as sending messages to the chosen application server, and enforcing the policies of the network for a given user.

The S/I-CSCF 24 interfaces with a second entity, the application server (AS) 25, using SIP. The application server AS 25 hosts and executes services and may be linked to a home subscriber server (HSS) not shown in the figures, which is a database containing IMS subscriber-related information, including identification, authorized services, subscribed services and can provide information about the user's physical location.

This INVITE message sent by the UE 1 and received by the S/I-CSCF 24 is routed to the AS 25 which is able to verify whether, according to the settings of user B, a multiple ringing or a forking process has to be performed.

To this purpose, the AS 25 may include a policy enforcer application able to process the INVITE messages.

If the AS 25 ascertains that the user B has multiple ringing service active and that multiple ringing is settled for a plurality N of users UEn, where n=1..N, the AS 25 generates a corresponding plurality N of INVITE parallel call control messages INVITE1, INVITE2, INVITE3,...,INVITEn, each with a corresponding call identifier Call-Idl, Call-Id2, Call-Id3,...,Call-Idn and sends them back to the S/I-CSCF 24 serving user B.

If the AS 25 ascertains that the user B has forking service active and that forking is settled for a plurality N of devices UEn, where n=1..N, the AS 25 generates a corresponding plurality N of INVITE parallel call control messages INVITE, INVITE2, INVTTE3,...,INVTTEn, all with the same call identifier Call-Id and sends them back to the S/I-CSCF 24 serving user B.

In order to allow the entity performing CAC to verify whether each INVITE message processed by this entity has been generated by a parallel ringing process, where the parallel ringing process may be a forking or a multiple ringing, a parallel ringing identifier indicating that the message is a parallel message is associated to each INVITE message of the plurality N of INVITE parallel messages generated by the AS 25.

According to one embodiment, the identifier is a tag or indicator, e.g. TAG, associated to each INVITE parallel message to indicate the concerned INVITE message is an INVITE parallel message, i.e. that the concerned INVITE message is a result of a parallel ringing process.

According to another embodiment, the identifier is a header added to each INVITE parallel message to indicate that the concerned INVITE message is an INVITE parallel message, i.e. that the concerned INVITE message is a result of a parallel ringing process. For example, the header may include a Call-Id common to all INVITE messages generated from the parallel ringing process. This header may be a P-header or a new SIP header and may carry the Call-Id of the incoming INVITE or a newly generated globally unique identifier for correlation purposes.

Moreover, the header and the tag may coincide or may be separate information in the message.

For example, a P-header may be added for correlation purposes and for indicating that an INVITE message is an INVITE parallel message, i.e. that the concerned INVITE message is a result of a parallel ringing process.

In case of a multiple ringing process, where each INVITE parallel message is generated with corresponding call identifier Call-Id, the header carries the originating Call-Id, i.e. the Call-Id of the incoming INVITE message that generated the multiple ringing process.

In case of a forking process, where all INVITE parallel messages are generated with a same call identifier Call-Id, each INVITE message may be associated to a tag indicating that the concerned INVITE message has been generated in a forking process.

Since all generated INVITE messages belonging to the same incoming INVITE message are associated to an indicator indicating that the INVITE message is a parallel message, i.e. it has been generated in a forking or multiple ringing process, the entity performing CAC is able to identify the INVITE parallel messages and correlate only the INVITE parallel messages and perform call admission control once per realm.

According to one embodiment, a forking proxy may add a tag to the forked INVITE messages without adding any correlation identifier, such as a unique Call-Id, as this is already included in the forked INVITE messages. The tag may indicate to an SBC performing CAC which INVITE message shall trigger the correlation process.

According to an alternative embodiment, a forking proxy or B2BUA performing multiple ringing may add a header, P-header or new SIP header, carrying the information of the tag and the parallel ringing identifier to allow an SBC performing CAC to optimize correlation so as to correlate only the relevant INVITE messages.

According to a further alternative embodiment, a forking proxy or B2BUA performing multiple ringing may add both the tag and the header to the INVITE messages, for example if the header is intended to be used as generic information to correlate messages for any application. In this case, the header is used for correlation purposes and the tag indicates which INVITE messages have to be correlated so as to optimize correlation and to correlate only the relevant INVITE messages.

According to one embodiment, the tag and, preferably, the additional header is added to each INVITE message by the entity performing multiple ringing or forking. This entity may be the same S/I-CSCF 24 serving user B or, as shown in the examples, the AS 25 or a forking SIP proxy. This additional header is ignored and directly forwarded on by the entities not supporting it and/or not using it so that it does not modify the standard processing of the INVITE messages.

The plurality of INVITE messages INVITEn are then routed from the S/I-CSCF 24 serving user B to the S/1-CSCFs serving the multiple ringing users UEn.

In the example, the S/I-CSCF 24 sends the plurality of INVITE messages INVITEn to the S/I-CSCF 26 serving users UEn.

In turns, the S/I-CSCF 26 serving users UEn sends the plurality of INVITE messages INVITEn to a third entity performing CAC, for example the Session Border Controller (SBC) 27 which, in the example, includes a P-CSCF. To ascertain if an incoming INVITE message is a parallel message, the SBC 27 checks if the INVITE message is associated to a parallel ringing identifier and, if positive, processes the header, such as the P-header, included in each INVITE parallel message to determine if the processed INVITE message is the first INVITE message of the multiple ringing or forking process.

If positive, SBC 27 performs CAC for realm1.

According to one embodiment, the entity performing CAC, for example the SBC 27, comprises a memory area where a table TABLE per realm is created for storing the globally unique identifier (e.g. Call-Id) carried in the header (e.g. the P-header), the associated CAC result (authorized or rejected) and a session counter.

Upon reception of an INVITE message, the SBC 27 checks whether this INVITE message is an INVITE parallel message, i.e. whether this INVITE message is a result of multiple ringing or forking and, if positive, it extracts the globally unique identifier from the additional header (e.g. P-header) and carries out a search for this globally unique identifier in the table TABLE associated with the relevant realm.

If a match is not found, the SBC 27 performs CAC for the relevant realm and, if the INVITE message is accepted, the table TABLE associated with this realm is updated with the globally unique identifier, the CAC result and a session counter.

If the INVITE message is rejected a guard timer is started, e.g. 30 seconds.

If a match is found and the CAC status is 'authorized', no reservation of resources and no CAC is necessary. Therefore, the INVITE message is authorized to be sent forward and the session counter associated with the corresponding globally unique identifier in the table TABLE is incremented.

It should be noted that any time a session is either successfully established (200 OK response for the INVITE message is received) or cancelled (CANCEL received) or closed with an error response (4xx, 5xx), the corresponding session counter is decremented and once it reaches zero the relevant entries are removed from the table TABLE.

If a match is found and the CAC status is 'rejected', the INVITE message is rejected and the guard timer restarted. When the guard timer expires, the globally unique identifier and all its associated information are deleted from the table TABLE.

By deleting the globally unique identifier and all its associated information from the table TABLE, memory resources of this realm can be optimized.

According to an alternative embodiment, the P-Header or the tag may be added by the S/I-CSCF 24 serving the called party user B if so indicated in the Initial Filter Criteria (iFC) for the AS 25 where the INVITE message has to be forwarded. The AS 25 then copy the information (P-Header and/or tag) into all possible outgoing INVITE messages. It should be noted that, according to this embodiment, the P-header or tag are not added by the entity performing forking or multiple ringing process and so they only give an indication that an INVITE message might be a result of a parallel ringing process and not a deterministic mechanism to indicate that an INVITE message is an INVITE parallel message. This additional header P-Header is ignored by the entities not supporting it and/or not using it so that it does not modify the standard processing of the INVITE messages.

According to one embodiment, the SBC 27 removes the additional header, for example if a P-header is used to carry the globally unique identifier, when forwarding the INVITE message to the destination UE.

In this embodiment, the Call-Id of the incoming INVITE message at the AS 25 is used as globally unique identifier and include in to the P-header in all out outgoing INVITE messages.

In the example shown in figure 2, the S-CSCF 24 serving user B routes an INVITE message INVITE B with Call-Idl to the AS 25. The AS 25 verifies that user B has multiple ringing service active to ring users C, D and E. Accordingly, the AS 25, acting as a B2BUA, sends back to the S-CSCF 24 an INVITE message INVITE C to ring user C with Call-Id2, an INVITE message INVITE D to ring user D with Call-Id3 and an INVITE message INVITE E to ring user E with Call-Id4.

In particular, the AS 25 adds to each INVITE message INVITE C, INVITE D and INVITE E a P-Header P-M-C 1 including the Call-Idl of the received INVITE message INVITE B.

The INVITE messages INVITE C, INVITE D and INVITE E are routed as per standard IMS routing (as specified in 3GPP TS 23.228 and TS 24.229) to the S/I-CSCF 26 serving users C, D and E.

The S/I-CSCF 26 sends INVITE C with Call-Id2 to the SBC 27 which checks the P-header P-M-C 1 and, as described above, reveals that this is the first call of the multiple ringing process. Then, the SBC 27 performs CAC for realm1 28, updates the table TABLE for the realm1 and, if resources are available, removes the P-header P-M-C 1 from the INVITE message INVITE B and routes the call to the destination UE (not shown) of the user C.

Subsequently, the S/I-CSCF sends the INVITE messages INVITE D and INVITE E with Call-Id3 and Call-Id4 to the SBC 27, which checks the P-header P-M-C 1 with respect to the content of the table TABLE for realm1 28 and finds a match indicating that INVITE D and INVITE E belong to the same multiple ringing process as INVITE C.

Consequently, the SBC 27 does not perform CAC, removes the P-header from INVITE D and INVITE E and route the calls to the destination UE (not shown) of users D and E.

It should be noted that the functionalities of the SIP entities described herein may be implemented using a computer program product comprising computer executable instructions, i.e., software entities made of data and/or definition of actions that can be performed on data, embodied in a computer readable medium. Examples of computer readable media suitable for implementing the method and system described herein include chip memory devices, programmable logic devices, application-program interfaces, processing units, and dedicated circuitry for achieving functionalities. The functionalities of the invention can be implemented in a single device or can be distributed in a plurality of physical devices in a decentralized fashion.

From the discussion above, it should be clear to those skilled in the art that the present invention provides a method and a system controlling call admission for parallel ringing processes to a realm in IMS which allow CAC to allocate resources for one call per realm.

While the invention has been described with reference to preferred embodiments, the description is illustrative of the invention and is not to be construed as limiting the invention. Various modifications and applications may occur to those skilled in the art without departing from the scope of the invention as defined by the appended claims.

## Claims

1. A method for controlling call admission for parallel ringing processes to a realm in an IP multimedia subsystem (IMS), the method comprising the steps of:
(a) receiving a call control message from a caller party to a called party,
(b) determining whether said called party has parallel ringing enabled,
(c) if said step (b) is positive, executing parallel ringing by generating a plurality of parallel call control messages directed to a corresponding plurality of user equipments belonging to a realm,
(d) associating, to each parallel call control message generated in said step (c), a parallel ringing identifier indicating that the corresponding call control message is a parallel call control message,
(e) receiving a plurality of call control messages directed towards said realm,
(f) performing call admission control for said realm, said step (f) comprising verifying whether a parallel ringing identifier is associated to each call control message directed towards said realm so as to determine if the call control message is a parallel call control message.

2. The method of claim 1, wherein said step (f) further comprises the steps of:
- correlating the call control messages of said plurality of call control messages to which a parallel ringing identifier is associated, and
- performing call admission control based on the result of said correlating step.

3. The method of claim 1 or 2, wherein, said step (d) comprises associating, to each parallel call control message generated in said step (c), a tag indicating that the corresponding call control message is a parallel call control message.

4. The method of any of claims 1-3, wherein, said step (d) comprises adding, to each parallel call control message generated in said step (c), a header indicating that the corresponding call control message is a parallel call control message.

5. The method of any of claims 1-4, wherein said parallel ringing is forking whereby each parallel call control message of said plurality generated in step (c) carries a same call identifier,
said step (d) comprising associating a tag indicating that the corresponding call control message is a parallel call control message.

6. The method of any of claims 1-4, wherein said parallel ringing is a multiple ringing process whereby each parallel call control message generated in step (c) carries a corresponding call identifier, said step (d) comprising adding a header carrying the call identifier of the call control message received in step (a), whereby said header indicates that the corresponding call control message is a parallel call control message.

7. The method of claim 6, wherein a database is provided for storing, for a realm, at least a call identifier and a call admission control information, said step (f) comprising:
- processing a parallel call control message to extract the call identifier carried by the associated header,
- accessing said database for verifying if said extracted call identifier is stored in said database,
- if negative, performing call admission control for said parallel call control message for said realm and storing, in said database, said extracted call identifier and a call admission control information,
- if positive, processing said parallel call control message for said realm based on the call admission control information stored in said database.

8. The method of any of claims 1-7, wherein said call control message is a SIP INVITE message.

9. A computer program product directly loadable in the memory of a numerical processing device, comprising portions of program code which can perform the method in accordance with any one of the claims from 1 to 8, when running on said processing device.

10. A communication system for controlling call admission for parallel ringing processes to a realm in an IP multimedia subsystem (IMS), the system comprising:
- a first entity for receiving a call control message from a caller party to a called party and forwarding,
- a second entity communicating with said first entity and configured to perform the following operations:
- determining whether said called party has parallel ringing enabled,
- if positive, executing parallel ringing by generating a plurality of parallel call control messages directed to a corresponding plurality of user equipments belonging to a realm,
- associating, to each generated parallel call control message, a parallel ringing identifier indicating that the corresponding call control message is a parallel call control message,
- a third entity communicating with said second entity and configured to receive a plurality of call control messages directed towards said realm and perform call admission control for said realm by verifying whether a parallel ringing identifier is associated to each call control message directed towards said realm so as to determine if the call control message is a parallel call control message.

11. The method of claim 10, wherein said third entity is configure to correlate the call control messages of said plurality of call control messages to which a parallel ringing identifier is associated, and perform call admission control based on the result of said correlation.

12. The communication system of claim 10 or 11, wherein said second entity is configured to associate, to each generated parallel call control message, a tag indicating that the corresponding call control message is a parallel call control message.

13. The communication system of any of claims 10-12, wherein said second entity is configured to add, to each generated parallel call control message, a header indicating that the corresponding call control message is a parallel call control message.

14. The communication system of any of claims 10-13, wherein said parallel ringing is a forking process, said second entity being configured to generate the plurality of parallel call control messages carrying a same call identifier and to associate, to each generated parallel call control message, a tag indicating that the corresponding call control message is a parallel call control message.

15. The communication system of any of claims 10-13, wherein said parallel ringing is a multiple ringing process, said second entity being configured to generate the plurality of parallel call control messages each carrying a corresponding call identifier and to add to each generated parallel call control message a header carrying the call identifier of the call control message received by said first entity.

16. The communication system of claim 15, further comprising a database for storing, for a realm, at least a call identifier and a call admission control information, said third entity being configured to perform the following operations:
- processing a parallel call control message to extract the call identifier carried by the associated header,
- accessing said database for verifying if said extracted call identifier is stored in said database,
- if negative, performing call admission control for said parallel call control message for said realm and storing, in said database, said extracted call identifier and a call admission control information,
- if positive, processing said parallel call control message for said realm based on the call admission control information stored in said database.

17. The communication system of claim 16, wherein said database is included in said third entity.
